# EUROPEAN PATENT SPECIFICATION

(11) **EP 3 016 441 B1**
(45) Date of publication and mention of the grant of the patent: **27.12.2017**
(21) Application number: 14817563.1
(22) Date of filing: 11.04.2014
(51) Int. Cl.: H04W 48/16, H04L 29/06, H04W 72/04, H04W 76/02, H04W 8/00, H04B 7/155, H04W 84/12

(54) **SEARCHING FOR DEVICE IN DIRECT COMMUNICATION SYSTEM**
SUCHE NACH VORRICHTUNGEN IN EINEM KOMMUNIKATIONSSYSTEM
RECHERCHER UN DISPOSITIF DANS UN SYSTÈME DE COMMUNICATION DIRECTE

(30) Priority: 28.06.2013 US 201361840469 P; 26.01.2014 US 201461931669 P
(43) Date of publication of application: 04.05.2016
(73) Proprietor: LG Electronics Inc., Seoul 07336 (KR)
(72) Inventor: LEE, Byungjoo, Seoul 137-893 (KR); CHO, Hangyu, Seoul 137-893 (KR); PARK, Giwon, Seoul 137-893 (KR); KIM, Dongcheol, Seoul 137-893 (KR)
(74) Representative: Cabinet Plasseraud
(86) International application number: PCT/KR2014/003142
(87) International publication number: WO 2014/208878

(56) References cited:
- KR-A- 20120 073 150
- KR-A- 20130 016 609
- KR-B1- 101 260 913
- US-A1- 2011 149 806
- US-A1- 2013 166 759
- "Wi-Fi CERTIFIED Wi-Fi Direct(TM) - Personal, portable Wi-Fi(R) technology", WI-FI DIRECT WHITE PAPER 20101025 INDUSTRY, WI-FI ALLIANCE, US, 25 October 2010 (2010-10-25), pages 1-14, XP008165049,

## Description

### [Field of the Invention]

The following description relates to a wireless communication system and, most particularly, to a method for searching for a device in a direct communication system and an apparatus therefor.

### [Background Art]

Recently, with the development of information communication technology, various wireless communication technologies have been developed. Of the technologies, wireless LAN (WLAN) is the technology that allows home or company or a specific service zone to access Internet wirelessly by using a portable terminal such as a personal digital assistant (PDA), a lap top computer, a portable multimedia player (PMP).

As direct communication technology that may allow devices to be easily connected with each other without a radio access point (AP) basically required in a conventional WLAN system, the introduction of Wi-Fi Direct or Wi-Fi peer-to-peer (P2P) has been discussed. According to Wi-Fi Direct, devices may be connected to each other even without a complicated establishment procedure. Also, Wi-Fi Direct may support a mutual operation for data transmission and reception at a communication speed of a general WLAN system to provide users with various services.

Recently, various Wi-Fi support devices have been used. Of the Wi-Fi support devices, the number of Wi-Fi Direct support devices that enable communication between Wi-Fi devices without AP has been increased. In Wi-Fi Alliance (WFA), technology for the introduction of a platform for supporting various services (for example, Send, Play, Display, Print, etc.) using Wi-Fi Direct link has been discussed. This may be referred to as Wi-Fi Direct Service (WFDS).

According to a display service, among the WFDS, a WFD (Wi-Fi Display) Source and a WFD Sink may search for one another through a WFD IE (Information Element), which is included in probe request and response frames.
The document US 2013/166759 discloses a method of peer discovery in a communications network including transmitting, by a first client station, a request to a second client station. The document US 2011/149806 discloses a method for service discovery in a Wi-Fi direct.

### [Detailed Description of the Invention]

### [Technical Objects]

An object of the present invention is to provide a method for searching for a device in a WFD service. More specifically, in the present invention, an object of the present invention is to provide a method for verifying an AP (Access Point), to which a WFD sink is connected, based upon information received by a WFD source from the WFD sink.

The technical objects of the present invention will not be limited only to the technical objects described above. Accordingly, technical objects that have not been mentioned above or additional technical objects of the present application may become apparent to those having ordinary skill in the art from the description presented below.

### [Technical Solutions]

To solve the aforementioned technical there are provided a method according to claim 1, a method according to claim 10, a first wireless device according to claim 11 and a second wireless device according to claim 12. Preferred embodiments are defined by the the dependent claims.

The general description of the present invention, which is described above, and the detailed description of the present invention that will follow are merely exemplary and are provided for the additional description of the claimed invention.

### [Advantageous Effects]

According to the present invention, a method for searching for a device in a WFD service may be provided. More specifically, in the present invention, a method for verifying an AP (Access Point), to which a WFD sink is connected, based upon information received by a WFD source from the WFD sink may be provided.

The effects of the present invention will not be limited only to the effects described above. Accordingly, effects that have not been mentioned above or additional effects of the present application may become apparent to those having ordinary skill in the art from the description presented below.

### [Brief Description of the Drawings]

The accompanying drawings, which are included to provide a further understanding of the invention and are incorporated in and constitute a part of this application, illustrate embodiment(s) of the invention and together with the description serve to explain the principle of the invention.
FIG. 1 illustrates a diagram for an example of a structure of IEEE 802.11 system to which the present invention is applicable.
FIG. 2 illustrates a diagram showing an exemplary Wi-Fi Direct network.
FIG. 3 illustrates a diagram showing a method for configuring a Wi-Fi Direct network.
FIG. 4 illustrates a diagram showing a neighboring discovery procedure.
FIG. 5 illustrates a diagram showing a new aspect of a Wi-Fi Direct network.
FIG. 6 illustrates a diagram showing a method for configuring a link for Wi-Fi Direct communication.
FIG. 7 illustrates a diagram showing a method for associating with a communication group that performs Wi-Fi Direct.
FIG. 8 illustrates a diagram showing a method for configuring a link for Wi-Fi Direct communication.
FIG. 9 illustrates a diagram showing a method for configuring a link that is associated with a Wi-Fi Direct communication group.
FIG. 10 illustrates a diagram illustrating WFDS framework components.
FIG. 11 illustrates a procedure for establishing a WFD session between a WFD source and a WFD sink.
FIG. 12 illustrates a schematized diagram of a topology corresponding to a case when a WFD session between a WFD source and a WFD sink is established based upon the procedure shown in FIG. 11.
FIG. 13 illustrates a schematized diagram of a topology having a WFD session established therein, when a direct link already exists between a WFD source and a WFD sink.
FIG. 14 illustrates a schematized diagram of a topology having a WFD session established therein, when a WFD source is connected to an AP, and when a WFD sink is not connected to the AP.
FIG. 15 illustrates a schematized diagram of a topology having a WFD session established therein, when a WFD source is connected to an AP, and when a direct link already exists between a WFD source and a WFD sink.
FIG. 16 to FIG. 19 respectively illustrate schematized diagrams of a topology having a WFD session established therein, when a WFD source and a WFD sink are connected to the same AP.
FIG. 20 and FIG. 21 respectively illustrate schematized diagrams of a topology having a WFD session established therein, when a WFD sink is connected to an AP.
FIG. 22 and FIG. 23 respectively illustrate schematized diagrams of a topology having a WFD session established therein, when a WFD source and a WFD sink are connected to different APs.
FIG. 24 illustrates a diagram briefly indicating formats of a probe request frame and a probe response frame.
FIG. 25 illustrates a diagram showing an example of having a WFD sink notify information on its inter-connected AP to a WFD source, when the WFD sink is inter-connected to the AP.
FIG. 26 illustrates a diagram showing an example of having encoding data for each task streamed to different WFD sinks, when a WFD source is performing multiple tasks.
FIG. 27 illustrates a diagram showing an example of having multiple sets of encoding data for each task streamed to a single WFD sink, when a WFD source is performing multiple tasks.
FIG. 28 illustrates a diagram showing an example of having a WFD source stream a foreground task and a background task to different WFD sinks.
FIG. 29 illustrates a diagram showing an example of having encoding data for each window streamed to different WFD sinks, when a WFD sink is displaying multiple windows.
FIG. 30 illustrates a diagram showing an example of data being streamed in accordance with an attribute of a task.
FIG. 31 illustrates a diagram showing an example of data having a slide show of photo images stored in a WFD source encoded therein streamed from a WFD sink.
FIG. 32 illustrates a diagram showing an example of having encoding data for each display streamed to different WFD sinks, when a WFD source is being operated in a multiple display environment.
FIG. 33 illustrates a diagram showing an example of having a WFD sink output data that are received along with a task, which is being performed by the WFD sink itself.
FIG. 34 and FIG. 35 illustrate an example of having a WFD source perform control operations so that different sets of data can be streamed for each display of the WFD sink.
FIG. 36 illustrates a structure of a wireless device according to an exemplary embodiment of the present invention.

### [Best Mode for Carrying Out the Present Invention]

Reference will now be made in detail to the preferred embodiments of the present invention, examples of which are illustrated in the accompanying drawings. In the following detailed description of the invention includes details to help the full understanding of the present invention. Yet, it is apparent to those skilled in the art that the present invention can be implemented without these details.

Occasionally, to prevent the present invention from getting unclear, structures and/or devices known to the public are skipped or can be represented as block diagrams centering on the core functions of the structures and/or devices. Wherever possible, the same reference numbers will be used throughout the drawings to refer to the same or like parts.

Specific terminologies used for the following description may be provided to help the understanding of the present invention. And, the use of the specific terminology may be modified into other forms within the scope of the technical idea of the present invention.

Embodiments of the present invention may be supported by the disclosed standard documents of at least one of wireless access systems including IEEE 802 system, 3GPP system, 3GPP LTE system, LTE-A (LTE-Advanced) system and 3GPP2 system. In particular, the steps or parts, which are not explained to clearly reveal the technical idea of the present invention, in the embodiments of the present invention may be supported by the above documents. Moreover, all terminologies disclosed in this document may be supported by the above standard documents.

The following description may apply to various wireless access systems including CDMA (code division multiple access), FDMA (frequency division multiple access), TDMA (time division multiple access), OFDMA (orthogonal frequency division multiple access), SC-FDMA (single carrier frequency division multiple access) and the like. CDMA can be implemented with such a radio technology as UTRA (universal terrestrial radio access), CDMA 2000 and the like. TDMA can be implemented with such a radio technology as GSM/GPRS/EDGE (Global System for Mobile communications)/General Packet Radio Service/Enhanced Data Rates for GSM Evolution). OFDMA can be implemented with such a radio technology as IEEE 802.11 (Wi-Fi), IEEE 802.16 (WiMAX), IEEE 802.20, E-UTRA (Evolved UTRA), etc. UTRA is a part of UMTS (Universal Mobile Telecommunications System). 3GPP (3rd Generation Partnership Project) LTE (long term evolution) is a part of E-UMTS (Evolved UMTS) that uses E-UTRA. The 3GPP LTE adopts OFDMA in downlink (hereinafter abbreviated) DL and SC-FDMA in uplink (hereinafter abbreviated UL). And, LTE-A (LTE-Advanced) is an evolved version of 3GPP LTE.

For clarity, the following description mainly concerns IEEE 802.11 system, by which the technical features of the present invention may be non-limited.

### Structure of WLAN System

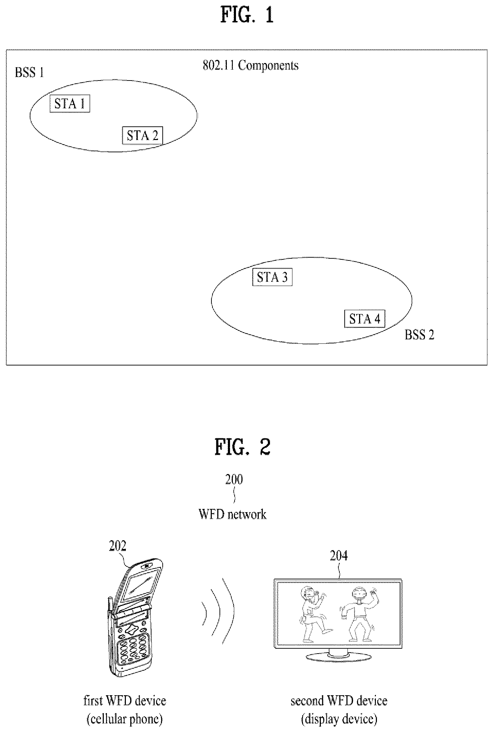

FIG. 1 illustrates a diagram for an example of a structure of IEEE 802.11 system to which the present invention is applicable.

IEEE 802.11 structure may include a plurality of components and WLAN supportive of transparent STA mobility for an upper layer can be provided by interactions of the components. A basic service set (BSS) may correspond to a basic configuration block in IEEE 802.11 LAN. FIG. 1 shows one example that two basic service sets (BSS 1 and BSS 2) exist and that 2 STAs are included as members of each BSS. In particular, STA 1 and STA 2 are included in the BSS 1 and STA 3 and STA 4 are included in the BSS 2. In FIG. 1, an oval indicating the BSS can be understood as indicating a coverage area in which the STAs included in the corresponding BSS maintain communications. This area may be named a basic service area (BSA). Once the STA moves away from the BSA, it is unable to directly communicate with other STAs within the corresponding BSA.

A BSS of a most basic type in IEEE 802.11 LAN is an independent BSS (IBSS). For instance, IBSS can have a minimum configuration including 2 STAs only. Moreover, the BSS (e.g., BSS 1 or BSS 2) shown in FIG. 1, which has the simplest configuration and in which other components are omitted, may correspond to a representative example of the IBSS. Such a configuration is possible if STAs can directly communicate with each other. The above-configured LAN is not configured by being designed in advance but can be configured under the necessity of LAN. And, this may be called an ad-hoc network.

If an STA is turned on/off or enters/escapes from a BSS area, membership of the STA in a BSS can be dynamically changed. In order to obtain the membership in the BSS, The STA can join the BSS using a synchronization procedure. In order to access all services of the BSS based structure, the STA should be associated with the BSS. This association may be dynamically configured or may include a use of a DSS (distribution system service).

### Layer structure

The operation of the STA which is operated in the wireless LAN system may be described in view of layer structure. In aspect of device configuration, layer structure may be implemented by a processor. The STA may have a structure of a plurality of layers. For example, a layer structure handled by the 802.11 standard document mainly includes a MAC sublayer and a physical (PHY) layer on a data link layer (DLL). The PHY layer may include a physical layer convergence procedure (PLCP) entity, a physical medium dependent (PMD) entity, etc. The MAC sublayer and the PHY layer conceptionally include management entities called MAC sublayer management entity (MLME) and physical layer management entity (PLME), respectively. These entities provide a layer management service interface that operates a layer management function.

In order to provide exact MAC operation, an SME (Station Management Entity) is present within each STA. The SME is a layer independent entity that may be viewed as residing in a separate management plane or as residing "off to the side." The exact functions of the SME are not specified in this document, but in general this entity may be viewed as being responsible for such functions as the gathering of layer-dependent status from the various layer management entities (LMEs), and similarly setting the value of layer-specific parameters. The SME may perform such functions on behalf of general system management entities and may implement standard management protocols.

The aforementioned entities interact in various ways. For example, the entities may interact by exchanging GET/SET primitives. The primitive means a set of elements or parameters related to a specific object. XX-GET.request primitive is used for requesting the value of the given MIB attribute (management information base attribute). XX-GET.confirm primitive is used for returning the appropriate MIB attribute value if status is "success," otherwise returning an error indication in the Status field. XX-SET.request primitive is used for requesting that the indicated MIB attribute be set to the given value. If this MIB attribute implies a specific action, this requests that the action be performed. And, XX-SET.confirm primitive is used such that, if status is "success," this confirms that the indicated MIB attribute has been set to the requested value, otherwise it returns an error condition in the status field. If this MIB attribute implies a specific action, this confirms that the action has been performed.

Also, the MLME and the SME may exchange various MLME_GET/SET primitives through MLME_SAP (Service Access Point). Also, various PLME_GET/SET primitives may be exchanged between PLME and SME through PLME_SAP, and may be exchanged between the MLME and PLME through MLME-PLME_SAP.

### Evolution of wireless LAN

Standards for Wireless Local Area Network (WLAN) technology have been developed by Institute of Electrical and Electronics Engineers (IEEE) 802.11 group. IEEE 802.11a and 802.11b use an unlicensed band at 2.4 GHz or 5 GHz. IEEE 802.11b provides a transmission rate of 11 Mbps and IEEE 802.11a provides a transmission rate of 54 Mbps. IEEE 802.11g applies Orthogonal Frequency-Division Multiplexing (OFDM) at 2.4 GHz to provide a transmission rate of 54 Mbps. IEEE 802.11n may use Multiple Input Multiple Output (MIMO)-OFDM, and provide a transmission rate of 300 Mbps. IEEE 802.11n may support a channel bandwidth up to 40 MHz to provide a transmission rate of 600 Mbps.

A direct link setup (DLS) related protocol under the environment according to IEEE 802.11e is based on QBSS (Quality BSS (basic service set)) that BSS supports QoS (Quality of Service). In QBSS, AP as well as non-AP STA is a QAP (Quality AP) that supports QoS. However, under the WLAN environment (for example, WLAN environment according to IEEE 802.11a/b/g) which is currently commercialized, although the non-AP STA is a QSTA (Quality STA) that supports QoS, the AP is likely to be a legacy AP that fails to support QoS. As a result, there is a limitation that DLS service cannot be used even in case of the QSTA under the WLAN environment which is currently commercialized.

Tunneled direct link setup (TDLS) is a wireless communication protocol which is newly suggested to solve such a limitation. TDLS, although not supporting QoS, enables QSTAs to set a direct link even under the WLAN environment such as IEEE 802.11a/b/g which is currently commercialized and set a direct link even in case of a power save mode (PSM). Accordingly, TDLS prescribes all the procedures for enabling QSTAs to set a direct link even at BSS managed by the legacy AP. Hereinafter, a wireless network that supports TDLS will be referred to as a TDLS wireless network.

### Wi-Fi Direct network

The WLAN according to the related art has mainly handled the operation of an infrastructure BSS that a radio access point (AP) functions as a hub. The AP performs a physical layer support function for wireless/wire connection, a routing function for devices on the network, and service provision for adding/removing a device to/from the network. In this case, devices within the network are not directly connected with each other but connected with each other through the AP.

As technology for supporting direct connection between devices, enactment of Wi-Fi Direct standard has been discussed.

FIG. 2 illustrates a diagram showing an exemplary Wi-Fi Direct network. The Wi-Fi Direct network is a network that enables Wi-Fi devices to perform device-to-device (D2D) (or peer-to-peer (P2P)) communication even without association with a home network, office network and hot spot network, and has been suggested by Wi-Fi Alliance. Hereinafter, Wi-Fi Direct based communication will be referred to as Wi-Fi Direct D2D communication (simply D2D communication) or Wi-Fi Direct P2P communication (simply, P2P communication). Also, a device that performs Wi-Fi Direct P2P will be referred to as Wi-Fi Direct P2P device, simply referred to as P2P device or Peer device.

Referring to FIG. 2, the Wi-Fi Direct network (200) may include at least one Wi-Fi device that includes a first P2P device (202) and a second P2P device (204). The P2P device may include Wi-Fi supporting devices, for example, a display device, a printer, a digital camera, a projector, a smart phone, etc. In addition, the P2P device may include a non-AP STA and an AP STA. In this example, the first P2P device (202) is a smart phone, and the second P2P device (204) is a display device. The P2P devices of the Wi-Fi Direct network may directly be interconnected. In more detail, P2P communication may mean that a signal transmission path between two P2P devices is directly configured in the corresponding P2P devices without passing through a third device (e.g., AP) or a legacy network (e.g., a network accessed to WLAN through an AP). In this case, a signal transmission path directly configured between two P2P devices may be limited to a data transmission path. For example, P2P communication may mean that a plurality of non-STAs transmit data (e.g., voice, image, text information, etc.) without passing through the AP. A signal transmission path for control information (e.g., resource allocation information for P2P configuration, wireless device identification information, etc.) may directly be configured between P2P devices (e.g., non-AP STA to non-AP STA, non-AP STA to AP), may be configured between two P2P devices (e.g., non-AP to non-AP STA) through the AP, or may be configured between the AP and the corresponding P2P device (e.g., AP to non-AP STA #1, AP to non-AP STA #2).

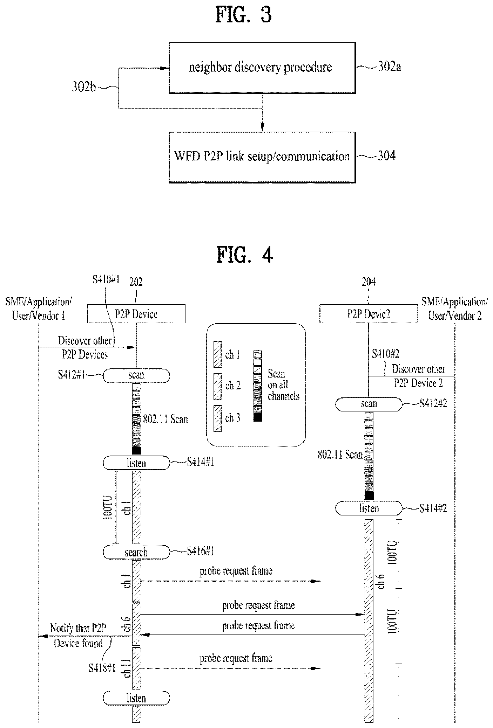

FIG. 3 illustrates a diagram showing a method for configuring a Wi-Fi Direct network.

Referring to FIG. 3, the Wi-Fi Direct network setup procedure may be largely classified into two procedures. The first procedure is a neighbor discovery (ND) procedure (S302a), and the second procedure is a P2P link configuration and communication procedure (S304). Through the neighbor discovery procedure, the P2P device (e.g., 202 of FIG. 2) searches for another neighbor P2P device (e.g., 204 of FIG. 2) within (its own radio) coverage, and may obtain information required for association (e.g., pre-association) with the corresponding P2P device. In this case, the pre-association may mean a second layer pre-association in a radio protocol. For example, information required for the pre-association may include identification information of the neighbor P2P device. The neighbor discovery procedure may be carried out per available radio channel (S302b). Afterwards, the P2P device (202) may perform Wi-Fi Direct P2P link configuration/communication with another P2P device (204). For example, after the P2P device (202) is associated with a peripheral P2P device (204), the P2P device (202) may determine whether the corresponding P2P device (204) is a P2P device incapable of satisfying service requirements of a user. To this end, after the P2P device (202) is second layer pre-associated with the peripheral P2P device (204), the P2P device (202) may search for the corresponding P2P device (204). If the corresponding P2P device (204) does not satisfy service requirements of the user, the P2P device (202) may sever the second layer association configured for the corresponding P2P device (204), and may configure the second layer association with another P2P device. By contrast, if the corresponding P2P device (204) satisfies the service requirements of the user, the two P2P devices (202 and 204) may transmit and receive signals through a P2P link.

FIG. 4 illustrates a diagram showing a neighboring discovery procedure. The example of FIG. 4 may be understood as an operation between the P2P device (202) and the P2P device (204) shown in FIG. 3.

Referring to FIG. 4, the neighbor discovery procedure of FIG. 3 may be initiated by indication of station management entity (SME)/application/user/vendor (S410), and may be classified into a scanning step (S412) and finding steps (S414 to S416). The scanning step (S412) may include the operation for scanning all available RF channels according to 802.11 schemes. Through the above-mentioned operation, the P2P device may confirm the best operation channel. The finding steps (S414 to S416) may include a listening mode (S414) and a search mode (S416). The P2P device may alternately repeat the listening mode (S414) and the search mode (S416). The P2P devices (202 and 204) may perform active search by using a probe request frame in the search mode (S416). For rapid search, the search range may be limited to social channels denoted by Channels #1, #6, #11 (2412, 2437, 2462 MHz). In addition, the P2P devices (202 and 204) may select only one channel from three social channels in the listening mode (S414), and maintain a reception status. In this case, if the other P2P device (e.g., 202) receives the probe request frame transmitted in the search mode, the P2P device (e.g., 204) generates a probe response frame in response to the received probe request frame. A time of the listening mode (S414) may be given at random (e.g., 100, 200, 300 time unit (TU)). The P2P devices continuously repeat the search mode and the reception mode so that they may reach a common channel. After the P2P device discovers another P2P device, the P2P device may discover/exchange a device type, a manufacturer, or a familiar device name by using the probe request frame and the probe response frame such that the P2P device may selectively be coupled to the corresponding P2P device. If the P2P device discovers the peripheral P2P device and obtains necessary information through the neighbor discovery procedure, the P2P device (e.g., 202) may notify SME/application/user/vendor of the P2P device discovery (S418).

Presently, P2P may be mainly used for semi-static communication such as remote printing, photo sharing, etc. However, due to generalization of Wi-Fi devices and location based services, P2P availability is gradually increased. For example, it is expected that the P2P device will actively be used for social chatting (for example, wireless devices subscribed to Social Network Service (SNS) recognize radio devices located in a neighboring region on the basis of the location based service and transmit and receive information), location-based advertisement provision, location-based news broadcasting, and game interaction between wireless devices. For convenience of description, such P2P application will hereinafter be referred to as new P2P application.

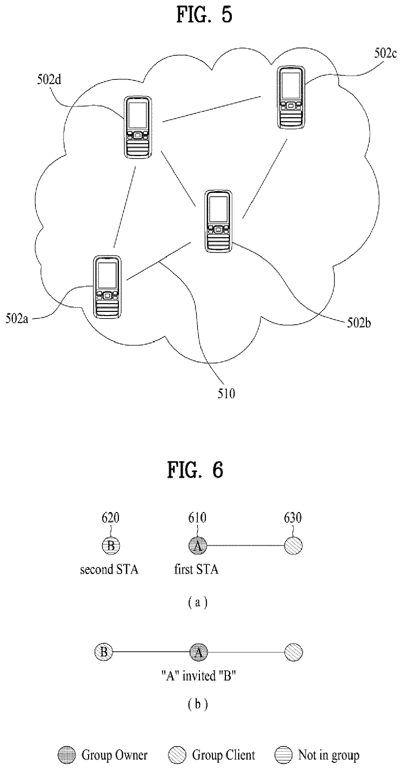

FIG. 5 illustrates a diagram showing a new aspect of a Wi-Fi Direct network.

The example of FIG. 5 may be understood as Wi-Fi Direct network aspect for use in the case in which new P2P application (e.g., social chatting, location-based service provision, game interaction, etc.) is applied.

Referring to FIG. 5, a plurality of P2P devices (502a-502d) performs P2P communication (510) in the Wi-Fi Direct network, P2P device(s) constituting the Wi-Fi Direct network may be changed at any time due to movement of the P2P device(s), and a new Wi-Fi Direct network may be dynamically generated or deleted within a short time. As described above, characteristics of the new P2P application indicate that P2P communication may dynamically be performed and terminated within a short time among a plurality of P2P devices in the dense network environment.

FIG. 6 illustrates a diagram showing a method for configuring a link for Wi-Fi Direct communication.

As shown in FIG. 6a, a first STA (610) (hereinafter, referred to as "A") is being operated as a group owner during conventional Wi-Fi Direct communication. If the A (610) discovers a second STA (620) (hereinafter, referred to as "B"), which is a new Wi-Fi Direct communication target and does not perform Wi-Fi Direct communication, during communication with a group client (630) of conventional Wi-Fi Direct communication, the A (610) tries link setup with the B (620). In this case, new Wi-Fi Direct communication is Wi-Fi Direct communication between the A (610) and the B (620), and since the A is a group owner, the A may perform communication setup separately from communication of the conventional group client (630). Since one Wi-Fi Direct group may include one group owner and one or more group clients, as shown in FIG. 6b, a Wi-Fi Direct link may be set as the A (610) which is one group owner is satisfied. In this case, the A (610) invites the B (620) to the conventional Wi-Fi Direct communication group, and in view of Wi-Fi Direct communication characteristic, WFD communication between the A (610) and the B (620) and between the A (610) and the conventional group client (630) may be performed. Wi-Fi Direct communication is supported selectively based on the device's capability.

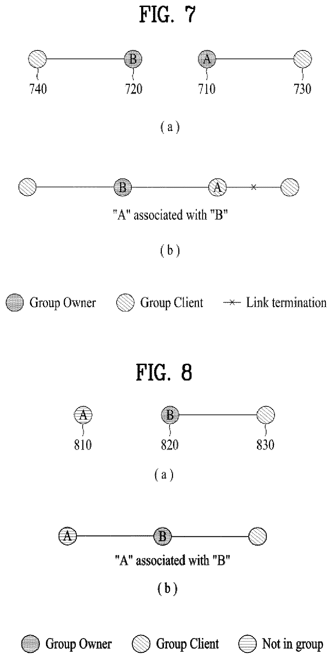

FIG. 7 illustrates a diagram showing a method for associating with a communication group that performs Wi-Fi Direct.

As shown in FIG. 7a, a first STA (710) (hereinafter, referred to as "A") is performing communication as a group owner for a group client (730), and a second STA (720) (hereinafter, referred to as "B") is performing communication as a group owner for a group client (740). As shown in FIG. 7b, the A (710) may terminate conventional Wi-Fi Direct communication and may perform association with a Wi-Fi Direct communication group to which the B (720) belongs. Since the A (710) is a group owner, the A (710) becomes a group client. Preferably, the A (710) terminates the conventional Wi-Fi Direct communication before requesting association with the B (720).

FIG. 8 illustrates a diagram showing a method for configuring a link for Wi-Fi Direct communication.

As shown in FIG. 8a, a second STA (820) (hereinafter, referred to as "B") is being operated as a group owner during conventional Wi-Fi Direct communication. If the B (820) is performing conventional Wi-Fi Direct communication with a group client (830), a first STA (810) (hereinafter, referred to as "A"), which does not perform the Wi-Fi Direct communication, discovers the B (820) and tries link setup for new Wi-Fi Direct communication with the B (820). In this case, if the B (820) accepts link setup, a new Wi-Fi Direct communication link between the A (810) and the B (820) is set, and the A (810) is operated as a client of conventional Wi-Fi Direct group of the B (820). This case corresponds to the case where the A (810) performs association with the Wi-Fi Direct communication group of the B (820). The A (810) may only perform Wi-Fi Direct communication with the B (820) which is a group owner, and Wi-Fi Direct communication between the A (810). Wi-Fi Direct communication is supported selectively based on the device's capability.

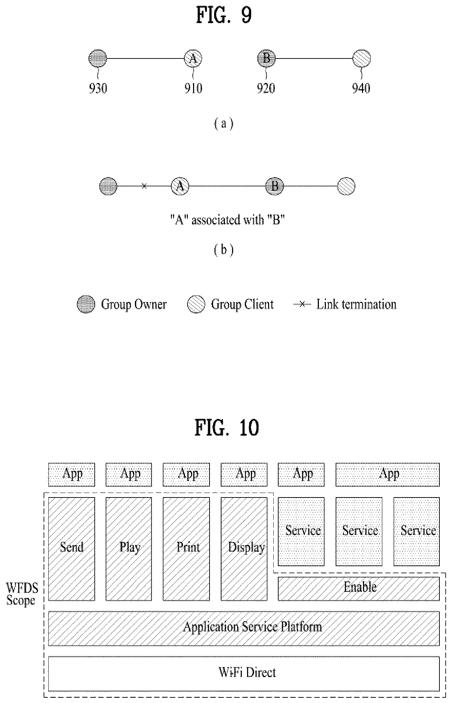

FIG. 9 illustrates a diagram showing a method for configuring a link that is associated with a Wi-Fi Direct communication group.

As shown in FIG. 9a, a first STA (910) (hereinafter, referred to as "A") is performing Wi-Fi Direct communication as a group client for a group owner (930). At this time, the A (910) discovers a second STA (920) (hereinafter, referred to as "B"), which is performing communication as a group owner for a group client (940) of another Wi-Fi Direct communication, and terminates a link with the group owner (930). And, the A (910) may perform association with Wi-Fi Direct of the B (920).

### Wi-Fi Direct Service (WFDS)

Wi-Fi Direct is the network connection standard technology defined to include an operation of a link layer. Since the standard of an application operated in an upper layer of a link configured by Wi-Fi Direct is not defined, it is difficult to support compatibility in the case that the application is driven after devices which support Wi-Fi Direct are interconnected. To solve this problem, standardization of the operation of the upper layer application called Wi-Fi Direct Service (WFDS) has been discussed by the Wi-Fi Alliance (WFA).

FIG. 10 illustrates a diagram illustrating WFDS framework components.

A Wi-Fi Direct layer of FIG. 10 means a MAC layer defined by the Wi-Fi Direct standard. The Wi-Fi Direct layer may include software compatible with the Wi-Fi Direct standard. Wireless connection may be configured below the Wi-Fi Direct layer by a physical layer (not shown) compatible with WiFi PHY layer. A platform called an ASP (Application Service Platform) is defined above the Wi-Fi Direct layer.

The ASP is a logical entity that implements functions required for services. The ASP is a common shared platform, and may process tasks such as device discovery, service discovery, ASP session management, connection topology management and security between an application layer above the ASP and the Wi-Fi Direct layer below the ASP.

A service layer is defined above the ASP. The service layer includes use case specific services. The WFA defines four basis services, Send, Play, Display and Print services. The four basic services defined in the WFA will be described briefly. First of all, Send means service and application that may perform file transfer between two WFDS devices. The Send service may be referred to as a file transfer service (FTS) in that it is intended for file transfer between peer devices. Play means a service and application that shares or streams audio/video (A/V), photo, music, etc. based on DLNA (Digital Living Network Alliance) between two WFDS devices. Print means a service and application that enables documents and photos to be output between a device having contents such as documents, photos, and so on, and a printer. Display means a service and application that enables screen sharing between a Miracast source and a sink of WFA.

An enable API (Application Program Interface) shown in FIG. 10 is defined to use an ASP common platform in the case that a third party application in addition to basic service defined by the WFA is supported. The service defined for the third party application may be used by one application only, or may be used generally (or commonly) by various applications.

Hereinafter, for convenience of description, the service defined by the WFA will be referred to as a WFA service, and the service newly defined by the third party not the WFA will be referred to as an enable service.

The application layer may provide a user interface (UI), and serves to express information to be recognized by the user and transfer an input of the user to a lower layer.

Based upon the description provided above, among the WFDS, the Display service will hereinafter be described in more detail.

### Wi-Fi Display

Among the WFDS, the Display service refers to a service and application that enable screen sharing between P2P devices. A P2P device using the Display Service may be referred to as a WFD device, and, among the WFD devices, a device supporting streaming of multimedia content through a device P2P link may be referred to as a Wi-Fi Display (WFD) Source, and a device receiving from the WFD Source device and through the P2P link performing rendering may be referred to as a WFD Sink.

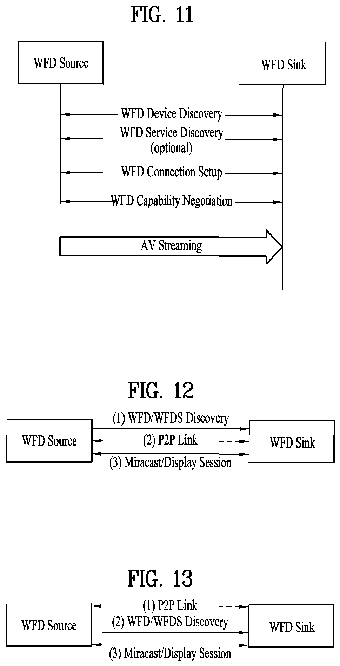

FIG. 11 illustrates a procedure for establishing a WFD session between a WFD source and a WFD sink. The WFD source and the WFD sink may discover the presence (or existence) of one another through an initial WFD Device Discovery prior to performing WFD connection setup. More specifically, the WFD devices may recognize the presence of one another through a probe request frame and a probe response frame each including a WFD information element (WFD IE). The WFD information element (WFD IE) may include basic information for establishing an optimal connection between the WFD devices, such as device type, device status, and so on. When a WFD device receives a probe request frame including a WFD IE, the WFD device may transmit a probe response frame including its WFD IE as a response to the received probe request frame.

When a WFD device is inter-connected to an AP, and in case the WFD device operates as a Wi-Fi P2P device, two or more Wi-Fi transmitters/receivers (or transceivers) logically operates on a single physical device. At this point, in order to perform the WFD Device Discovery, any one of the Wi-Fi transmitters/receivers (or transceivers) mentioned above may be used. In addition to the WFD IE, a P2P Information Element (P2P IE) may also be included in the probe request frame for the discovery of WFD devices, and this may be decoded by the Wi-Fi transmitters/receivers (or transceivers).

Thereafter, prior to performing WFD connection setup, the WFD source and the WFD sink may search for (or discover) a service capability of one another. More specifically, when any one of the WFD devices transmits a service discovery request frame, which includes a WFD ability as its information subelement, another WFD device may transmit a service discovery response frame, which includes its own WFD ability as its information subelement, as a response to the service discovery request frame. The service discovery procedure corresponds to an optional (or selective) procedure, and, herein, a WFD device supporting the service discovery procedure may perform the service discovery procedure with a searched (or discovered) WFD device, which also supports the service discovery procedure. In order to perform the service discovery procedure, information indicating whether or not the WFD device is equipped with the ability (or capability) to support the service discovery procedure may be included in the probe request frame and response frame, which are used for the service discovery procedure.

Thereafter, the WFD source or the WFD sink may select a peer WFD device for the WFD connection setup. A peer WFD device, which is to carry out the WFD connection setup, may be selected by a user input, or a peer WFD device, which is to carry out the WFD connection setup, may be automatically selected in accordance with a policy.

Subsequently, the WFD device may select a method for performing WFD connection setup with the selected peer WFD device. More specifically, the WFD device may establish WFD connection with any one Connectivity Scheme among Wi-Fi P2P and TDLS. The WFD devices may decide a connectivity scheme based upon an inter-connected BSSID subelement, which is delivered (or transmitted) along with Preferred Connectivity information and WFD information element.

If the WFD setup is successfully performed between the WFD devices by using Wi-Fi P2P or TDLS, the WFD device may carry out WFD capability negotiation. More specifically, by exchanging messages between one another by using a RTSP (Real-Time Streaming Protocol), the WFD source and the WFD sink may decide a parameter set, which defines an audio/video payload during one WFD session.

If the WFD capability negotiation is successfully ended, a WFD session (or miracast session) is established between the WFD source and WFD sink, and audio/video content may be streamed from the WFD source to the WFD sink.

FIG. 12 illustrates a schematized diagram of a topology corresponding to a case when a WFD session between a WFD source and a WFD sink is established based upon the procedure shown in FIG. 11. As shown in the example illustrated in FIG. 12, after performing WFD device discovery / service discovery, the WFD source and the WFD sink may establish a direct link (e.g., Wi-Fi P2P link or TDLS link). Thereafter, when the WFD session (or miracast session) is established, content may be streams from the WFD source to the WFD sink.

Unlike the example shown in the drawing, a direct link (e.g., Wi-Fi P2P link or TDLS link) may already be established between the WFD source and the WFD sink. In this case, instead of disengaging (or cancelling) the previously established direct link and establishing a new direct link, the WFD source and WFD sink may also establish a new WFD session by using the conventional (or already-existing) direct link.

For example, FIG. 13 illustrates a schematized diagram of a topology having a WFD session established therein, when a direct link already exists between a WFD source and a WFD sink. When a direct link already exists between the WFD source and the WFD sink, the direct link may be re-used in the miracast.

As shown in the example illustrated in FIG. 13, in case an IP connection is already established between the WFD devices, WFD device discovery / service discovery between the WFD devices may be performed through an IP packet, and, as described above in FIG. 11, WFD device discovery / service discovery between the WFD devices may also be performed probe request and response frames and service request and response frames.

Furthermore, a WFD session may initiate its connection within the already-existing direct link by using an IP packet or a Layer 2 frame (e.g., MAC frame).

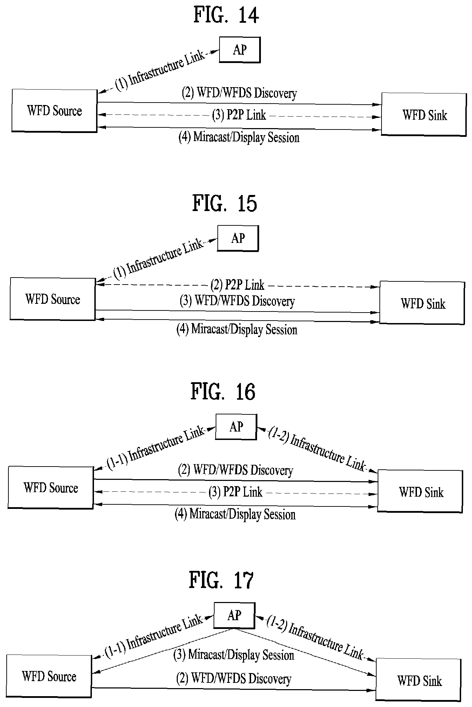

Subsequently, a procedure for establishing a WFD session while the WFD source is connected to an AP will hereinafter be described in detail. FIG. 14 illustrates a schematized diagram of a topology having a WFD session established therein, when a WFD source is connected to an AP, and when a WFD sink is not connected to the AP. If the WFD source supports a P2P Concurrent Mode, which may have multiple P2P links, after carrying out a WFD device discovery / service discovery while maintaining a connection with the AP, the WFD source create a direct link with the WFD sink while maintaining the already-existing connection with the AP.

Conversely, if the WFD source does not support the P2P Concurrent Mode, the WFD source may carry out the WFD device discovery / service discovery after disengaging (or cancelling) an already-existing infrastructure link with the AP. Accordingly, the WFD source may create a direct link with WFD sink while the connection with the AP is disengaged (or cancelled).

When a direct link is created between the WFD source and the WFD sink, the WFD source and the WFD sink may initiate a WFD session through the direct link, and content may be streamed.

In case the WFD source is connected to the AP, and in case a direct link already exists between the WFD source and the WFD sink, the direct link between the WFD source and the WFD sink may be re-used in the miracast. For example, FIG. 15 illustrates a schematized diagram of a topology having a WFD session established therein, when a WFD source is connected to an AP, and when a direct link already exists between a WFD source and a WFD sink.

As shown in the example illustrated in FIG. 15, in case an IP connection is already established between the WFD devices, WFD device discovery / service discovery between the WFD devices may be performed through an IP packet, and, as described above in FIG. 11, WFD device discovery / service discovery between the WFD devices may also be performed probe request and response frames and service request and response frames.

Furthermore, a WFD session may initiate its connection within the already-existing direct link by using an IP packet or a Layer 2 frame (e.g., MAC frame).

Subsequently, topologies in which a WFD session is established, in case the WFD source and the WFD sink are connected to the same AP, will hereinafter be described in detail.

FIG. 16 to FIG. 19 respectively illustrate schematized diagrams of a topology having a WFD session established therein, when a WFD source and a WFD sink are connected to the same AP.

If the WFD source and the WFD sink are connected to the same AP, the WFD device may carry out WFD device discovery / service discovery through an IP packet that passes through the AP, and, as shown in the example illustrated in FIG. 11, the WFD device may carry out the WFD device discovery / service discovery through the probe request and response frames and the service request and response frames.

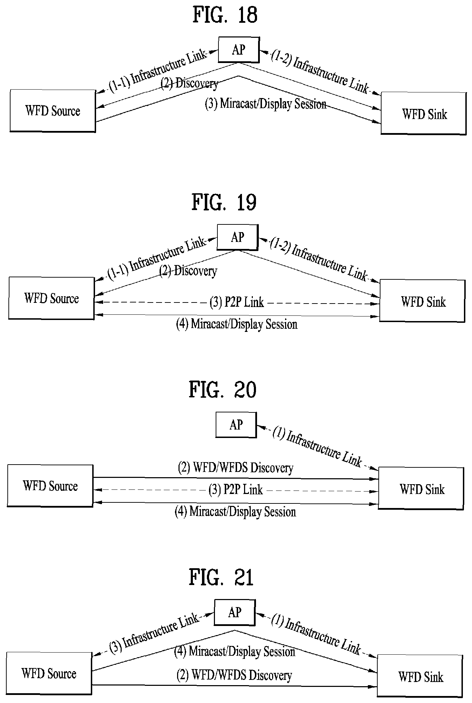

For example, examples of the WFD source and the WFD sink carrying out WFD device discovery / service discovery through the probe request and response frames and the service request and response frames, which do not pass through the AP, are shown in FIG. 16 and FIG. 17, and examples of the WFD source and the WFD sink carrying out WFD device discovery / service discovery through the probe request and response frames and the service request and response frames, which pass through the AP, are shown in FIG. 18 and FIG. 19.

After the WFD device discovery / service discovery, as shown in the examples respectively illustrated in FIG. 16 to FIG. 19, the WFD source and the WFD sink may create a direct link for establishing a connection of a WFD session. When a direct link is created between the WFD source and the WFD sink, as shown in the examples illustrated in FIG. 16 to FIG. 19, the WFD source and the WFD sink may initiate a WFD session through the direct link and may, then, stream the content.

Conversely, as shown in the examples illustrated in FIG. 17 and FIG. 18, the WFD source and the WFD sink may initiate a WFD session by re-using the already-existing connection (i.e., infrastructure link) with the AP without having to create a direct link between one another. However, in this case, the WFD source and the WFD sink should be capable of recognizing in advance that they are both connected to the same AP. Due to a long distance (or large gap) between the WFD source and the WFD sink, although it is inadequate to perform WiFi Direct communication, if the WFD source and the WFD sink are connected to the same AP, it shall be more effective to establish a WFD session by re-using an already-existing connection with the AP.

Subsequently, a topology in which a WFD session is established, in a case when only the WFD sink is connected to the AP, among the WFD source and the WFD sink, will hereinafter be described in detail.

FIG. 20 and FIG. 21 respectively illustrate schematized diagrams of a topology having a WFD session established therein, when a WFD sink is connected to an AP. First of all, the WFD source may discover a WFD sink through a transmission/reception (or transception) of a probe request frame and response frame.

Thereafter, as shown in the example illustrated in FIG. 20, the WFD source and the WFD sink may create a direct link for creating a WFD session and may, then, initiate the WFD through the created direct link. The WFD source may be capable of streaming content to the WFD sink through the WFD session.

If the WFD source is aware of the AP to which the WFD sink is connected, as shown in the example illustrated in FIG. 21, instead of creating a direct link with the WFD sink, after accessing (or connecting to) the AP to which the WFD sink is connected, the WFD source may also establish a WFD session by using its connection to the AP. The WFD source may then perform streaming of the content to the WFD sink through the WFD session.

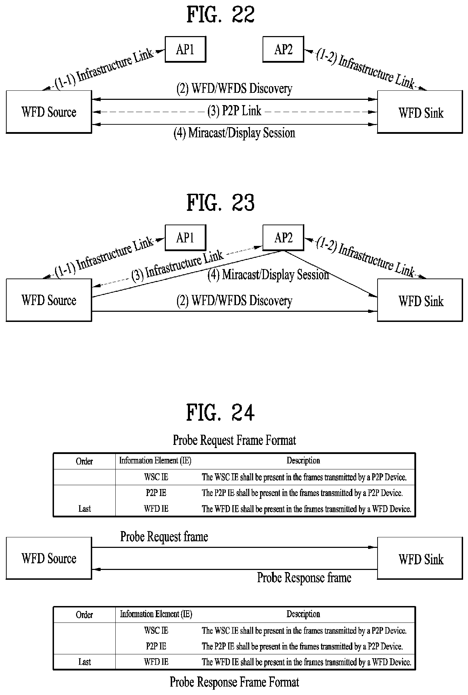

FIG. 22 and FIG. 23 respectively illustrate schematized diagrams of a topology having a WFD session established therein, when a WFD source and a WFD sink are connected to different APs. In case each of the WFD source and the WFD sink is connected to a different AP, the WFD sink may discover a WFD sink through a transmission/reception (or transception) of a probe request frame and response frame.

Thereafter, as shown in the example illustrated in FIG. 22, the WFD source and the WFD sink may create a direct link for creating a WFD session and may, then, initiate the WFD through the created direct link. The WFD source may be capable of streaming content to the WFD sink through the WFD session.

Conversely, as shown in the example illustrated in FIG. 23, after accessing (or connecting to) the AP to which the WFD sink is connected, the WFD source may also establish a WFD session by using its connection to the AP, to which the WFD source and the WFD sink are commonly connected. For example, if the WFD source is connected to AP1, and if the WFD sink is connected to AP2, after being disconnected from AP1 and being connected to AP2, the WFD source may establish a WFD session by using its connection to AP2, to which the WFD source and the WFD sink are commonly connected. Accordingly, the WFD source may perform streaming of the content to the WFD sink by using a WFD session, which is created to pass through AP2.

In the diverse exemplary topologies shown in FIG. 12 to FIG. 23, essentially, after establishing a direct link, the WFD source and the WFD sink may initiate a WFD session for content streaming by using the direct link. Conversely, in case the WFD source and the WFD sink are connected to the same AP, or in case the WFD source is capable of accessing (or being connected) to the AP to which the WFD sink is currently connected, instead of establishing a direct link, an WFD session for content streaming may also be initiated by using a connection to the AP. Although it is not shown in the drawings, in case the WFD sink is capable of accessing (or being connected to) the AP to which the WFD source is currently connected, in this case, also, an WFD session for content streaming may be initiated by using a connection to the AP.

However, when initiating a WFD session through an AP to which common connection is established, the WDF source is required to acquire information on the AP to which the WFD sink is currently connected. If the WFD source is currently connected to the AP, the WFD source may discover (or search for) a WFD sink, which is currently connected to the same AP, by limiting a broadcasting range of a device / service discovery request packet for performing discovery on the WFD sink to a subnet to which the WFD source belongs. However, in case the WFD sink is currently connected to an AP that is different from that of the WFD source, or in case the WFD source is not connected to the AP, it may be difficult to know the information on the WFD sink or the information on the AP to which the WFD sink is connected merely through the broadcasting of the device / service discovery request packet.

Accordingly, the present invention proposes a method of having the WFD source notify information on an AP, to which the WFD source is currently connected, to a WFD sink during a discovery procedure of the WFD device and a service discovery procedure and a method for having the WFD source acquire information on an AP, to which a WFD sink is currently connected.

The WFD source and the WFD sink may discover one another by using a probe request frame and a probe response frame. More specifically, at least one of a P2P information element and a WFD information element may be included in the probe request frame and the probe response frame.

Table 1 shows formats of WFD information elements.

**[Table 1]**

| Field | Size (octets) | Value (Hexadecimal) |
|---|---|---|
| Element ID | 1 | DD |
| Length | 1 | Variable |
| OUI | 3 | 50-6F-9A |
| OUI Type | 1 | 0A |
| WFD subelements | Variable | |

The Element ID field performs a function of identifying the WFD Information Element within the probe request frame and the probe response frame. And, the Length field may indicate the length of the WFD Information Element or the length of remaining fields subsequent to the Length field.

The OUI (Organizationally Unique identifier) field may have a value, which is decided by the WFA (Wi-Fi Alliance). The OUI Type field indicates a version of the WFD information element. For example, if the value of the OUI Type field is equal to 0x0A, this may indicate WFD v1.0.

WFD subelements may be included in the WFD Information Element. Table 2 corresponds to a table for describing formats of the WFD subelements, which are included in the WFD Information Element.

**[Table 2]**

| Field | Size (octets) | Value (Hexadecimal) |
|---|---|---|
| Subelement ID | 1 | |
| Length | 2 | Variable |
| Subelements body field | Variable | |

The Subelement ID field of Table 2 identifies the type of a WFD subelement, and the Length field, and the Length field may indicate the length of the WFD Subelement or the length of remaining fields subsequent to the Length field.

An adequate value respective to a subelement may be inserted in the Subelements body field.

Information that may be used as the WEF Subelement is as shown below in Table 3.

**[Table 3]**

| Subelement ID (Decimal) | Notes |
|---|---|
| 0 | WFD Device Information |
| 1 | Associated BSSID |
| 2 | WFD Audio Formats |
| 3 | WFD Video Formats |
| 4 | WFD 3D Video Formats |
| 5 | WFD Content Protection |
| 6 | Coupled Sink Information |
| 7 | WFD Extended Capability |
| 8 | Local IP Address |
| 9 | WFD Session Information |
| 10 | Alternative MAC Address |
| 11-255 | Reserved |

As listed above in Table 3, as listed above, WFD Device Information, BSSID associated with the WFD device, WFD Audio Formats, WFD Video Formats, WFD 3D Video Formats, WFD Content Protection, Coupled Sink Information, WFD Extended Capability, WFD Session Information, Alternative MAC Address, and so on, may be included in the WFD Information Element.

Herein, the WFD Device information may include WFD device information and information on a session management control port, and the Association BSSID information may include information on the BSSID that is associated with the WFD device.

The WFD Audio Formats, the WFD Video Formats, and the WFD 3D Video Contents may include information video/audio formats and 3D video formats supported by the WFD device. Furthermore, the WFD Content Protection field may include information on a content protection method, and, in case the WFD sink discovers a WFD source, the Coupled Sink Information may be included in case the WFD sink supports a Coupled Sink mode. The WFD Extended Capability may be included in case the WFD device supports TDLS persistence capability.

Hereinafter, Table 4 corresponds to a table for describing formats of the P2P Information Element.

**[Table 4]**

| Attribute ID | Attribute |
|---|---|
| 2 | P2P Capability |
| 13 | P2P Device Info |
| 15 | P2P Group ID |
| 9 | Intended P2P Interface Address |
| 0 | Status |
| 17 | Operating Channel |
| 11 | Channel List |
| 22 | Session Information Data Info |
| 23 | Connection Capability Info |
| 24 | Advertisement ID Info |
| 5 | Configuration Timeout |
| 6 | Listen Channel |
| 26 | Session ID Info |
| 27 | Feature Capability |
| 28 | Persistent Group Info |

As listed above in Table 4, information for using a previously established direct link between the WFD source and the WFD sink, such as P2P Capability of the device, P2P Device Info (Information), P2P Group ID, Intended P2P Interface Address, Device Status, Operating Channel, Channel List, Session Information Data Info (Information), Connection Capability Info (Information), Advertisement ID Info (Information), Configuration Timeout Information, Listen Channel, Session ID Info (Information), Feature Capability, Persistent Group Info (Information), and so on, may be included in the P2P Information Element.

In case the probe request frame and the probe response frame include both the P2P Information Element and the WFD Information Element, the WFD source and the WFD sink may establish a P2P connection through the P2P Information Element and may establish a WFD session (or miracast session) connection through the WFD Information Element.

A WSC (Wi-Fi Simple Configuration) Information Element may be further included in the probe request frame and the probe response frame. The WSC Information Element may include information for WSC or WPS (Wi-Fi Protected Setup), and, more specifically, the WSC Information Element may include information on UUID-E, manufacturer, model name, model number, serial number, Primary Device Type, device name, setup method, and so on.

FIG. 24 illustrates a diagram briefly indicating formats of a probe request frame and a probe response frame.

At this point, if the WFD source or the WFD sink is inter-connected with the AP, the WFD device that is inter-connected with the AP may notify information on the AP to which the WFD device is inter-connected to another WFD device through the probe request frame and the probe response frame.

More specifically, by including information on the AP, to which the WFD device is inter-connected, in at least one of a P2P Information Element and a WFD Information Element of the probe request frame and the probe response frame, the WFD device may deliver the information on the inter-connected AP to another WFD device. Herein, although the information on the AP may also be referred to as Infrastructure BBS Attribute information, such information will not be limited only to this information name.

The Infrastructure BBS Attribute information may be included in the P2P Information Element or may be included in the WFD Information Element or may be included in both the P2P Information Element and the WFD Information Element.

The WFD device that has received the Infrastructure BBS Attribute information may decode the Infrastructure BBS Attribute information and may, then, be capable of identifying the information on the AP, to which the counterpart WFD device is inter-connected, and the IP address, which is assigned to the counterpart WFD device from the AP.

For example, Table 5 corresponds to a table for describing formats of the Infrastructure BBS Attribute information.

**[Table 5]**

| Field | Size (Octets) | Value |
|---|---|---|
| Attribute ID | 1 | |
| Length | 2 | Variable |
| MAC Address | 6 | Variable |
| Country String | 3 | |
| Operating Class | 1 | |
| Channel Number | 1 | Variable |
| SSID Length | 1 | Variable |
| SSID | 0-32 | Variable |
| IP version | 1 | Variable |
| IP address | 6-16 | Variable |

Among the items listed in Table 5, the Attribute ID field performs a function of identifying the Infrastructure BBS Attribute information within the P2P Information Element or WFD Information Element. Additionally, the Length field may indicate the length of the Infrastructure BBS Attribute information or the length of remaining fields subsequent to the Length field.

The MAC Address field may indicate a BSSID of the AP.

The Country String field indicates a Country Code in which the Operating Class and Channel Number fields are valid.

The Operating Class field indicates a frequency band in which the AP operates, and the Channel Number field indicates a Channel number in which the AP operates. The WFD device may be capable of notifying the information on the frequency band and channel number of the AP, to which the WFD device is inter-connected, to its counterpart WFD device through the Operating Class field and the Channel Number field.

The SSID Length field indicates a length of the SSID of the AP, and the SSID field indicates the SSID of the AP. The WFD device may be capable of notifying the SSID of the AP, to which the WFD device is inter-connected, to its counterpart WFD device.

The IP version field indicates the IP version. For example, if the value of the IP version field is equal to 0x04, this may indicate that IP v4 is being used, and, if the value is equal to 0x06, this may indicate that IP v6 is being used.

The IP address field indicates an IP address of a Wi-Fi interface to which the AP is connected. The WFD device may be capable of notifying its IP address to its counterpart WFD device through the IP address field.

If the WFA source broadcasts a probe request frame including the Infrastructure BBS Attribute information, the WFD sink may verify whether or not the WFD sink is inter-connected to the same AP as the WFD source through the Infrastructure BBS Attribute information or may attempt to be connected to the AP, to which the WFD source is inter-connected, through the Infrastructure BBS Attribute information.

Conversely, if the WFD sink transmits a probe response frame including the Infrastructure BBS Attribute information to the WFD source, the WFD source may verify whether or not the WFD source is inter-connected to the same AP, to which the WFD sink is inter-connected, through the Infrastructure BBS Attribute information or may attempt to be connected to the AP, to which the WFD sink is inter-connected, through the Infrastructure BBS Attribute information.

The WFD device may notify information on the AP, to which the WFD device is inter-connected, through the service discovery request frame and the service discovery response frame. In this case, the Infrastructure BBS Attribute information may be included in the service discovery request frame and the service discovery response frame in an Attribute Frame format or a UTF-8 Text String (or string) format.

During the service discovery procedure, the Infrastructure BBS Attribute information may also be included in the service discovery request frame and the service discovery response frame. In this case, the Infrastructure BBS Attribute information may be included in the service discovery request frame and the service discovery response frame in an Attribute Frame format or a UTF-8 Text String (or string) format.

If the WFA source transmits a service discovery request frame including the Infrastructure BBS Attribute information to the WFD sink, the WFD sink may verify whether or not the WFD sink is inter-connected to the same AP as the WFD source through the Infrastructure BBS Attribute information or may attempt to be connected to the AP, to which the WFD source is inter-connected, through the Infrastructure BBS Attribute information.

Conversely, if the WFD sink transmits a service discovery response frame including the Infrastructure BBS Attribute information to the WFD source, the WFD source may verify whether or not the WFD source is inter-connected to the same AP, to which the WFD sink is inter-connected, through the Infrastructure BBS Attribute information or may attempt to be connected to the AP, to which the WFD sink is inter-connected, through the Infrastructure BBS Attribute information.

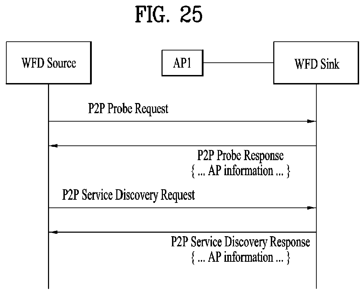

For example, FIG. 25 illustrates a diagram showing an example of having a WFD sink notify information on its inter-connected AP to a WFD source, when the WFD sink is inter-connected to the AP. As shown in the example illustrated in FIG. 25, as a response to the probe request frame, the WFD sink may transmit a probe response frame including the AP information (more specifically, the Infrastructure BBS Attribute information) to the WFD source, and, as a response to the service discovery request frame, the WFD sink may transmit a service discovery response frame including the AP information (more specifically, the Infrastructure BBS Attribute information) to the WFD source.

As shown in the example illustrated in FIG. 25, although the Infrastructure BBS Attribute information may be included in both the probe response frame and the service discovery response frame, the Infrastructure BBS Attribute information may also be included in any one of the probe response frame and the service discovery response frame. However, since whether or not to perform the service discovery procedure is decided in accordance with the WFD device capability, it will be more preferable to include the Infrastructure BBS Attribute information in the probe response frame rather than the service discovery response frame.

Based upon the AP information, which is included in the probe response frame (or the service discovery response frame), the WFD source may be connected to the AP, to which the WFD sink is currently connected. Similarly, based upon the AP information, which is included in the probe request frame (or the service discovery request frame), the WFD sink may be connected to the AP, to which the WFD source is currently connected. If the WFD source and the WFD sink are connected to the same AP, as described above in FIG. 16 to FIG. 19, a WFD session may be established by using the connection to the AP.

Even in a case when the WFD source and the WFD sink are verified to be connected to the same AP through an exchange of the probe request frame and the probe response frame (or the service discovery request frame and the service discovery response frame), as described above in FIG. 16 to FIG. 19, a WFD session may be established by using the connection to the AP.

Furthermore, in FIG. 12 to FIG. 25, although the description is made only on a Display service or a Wi-Fi Display (Miracast), among the Wi-Fi Direct services, it will be apparent that the characteristics of the P2P device transmitting or receiving AP information during the device discovery procedure or the service discovery procedure may also be applied to services (e.g., Play, Print, Send, and Enable Service, and so on) other than the Display service.

### Task-unit Video / Audio Streaming

When a WFD session is established, after encoding in real-time the sound (audio) and image (video) data (hereinafter referred to as AV (Audio / Video) data), which are outputted from the WFD source itself, the WFD source may stream the encoded data to the WFD sink through the WFD session. More specifically, by having the WFD source encode the entire sound and image, which are outputted from the WFD source itself, and by having the WFD sink decode the received stream and output the decoded stream to an entire screen (or full screen), the Display service may be executed. However, as described above, in case the WFD source encodes the entire image, which is being outputted from the WFD source itself, or in case the WFD sink outputs the received stream to an entire screen (or full screen), a problem may occur in that it may be difficult to process other tasks in the WFD source and the WFD sink during the Display service.

Accordingly, the present invention proposes a method of having the WFD source perform stream by encoding the AV data in task units instead of encoding the entire image that is being displayed.

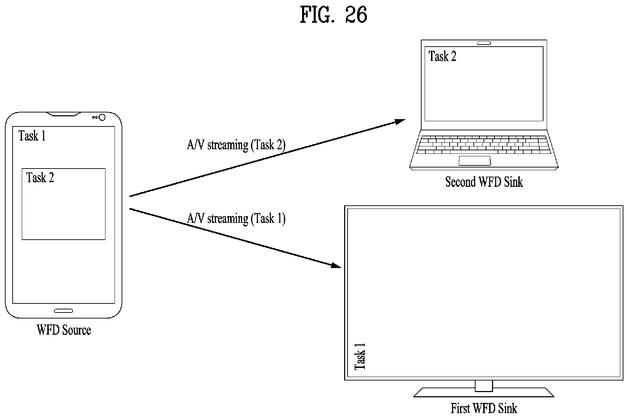

For example, FIG. 26 illustrates a diagram showing an example of having encoding data for each task streamed to different WFD sinks, when a WFD source is performing multiple tasks. As shown in the example illustrated in FIG. 26, while the WFD source is executing multiple tasks, if a WFD session is established with a first WFD sink and a second WFD sink, the WFD source may stream encoding data respective to the AV data of any one of the multiple tasks that are being executed to the first WFD sink, and the WFD source may stream encoding data respective the AV data of another one of the multiple tasks that are being executed to the second WFD sink. For example, as shown in the example illustrated in FIG. 26, if the first WFD source corresponds to a television, and in case the second WFD source corresponds to a laptop, the WFD source may stream first data having the AV data of a first task encoded therein to the TV, and the WFD source may stream second data having the AV data of a second task encoded therein to the laptop.

Since task-specific RAW image and sound are configured and created as the coding object (or target), instead of the image being displayed or sound being outputted through the first data and second data WFD source, when the WFD source displays the first task and the second task, as shown in the example illustrated in FIG. 26, even if a portion of the second task is covered by the first task, a second image may be capable of fully expressing (or displaying) the second task. Similarly, within the WFD source, since the first task is in an active state, and since the second task is in an inactive state, even if the second task is being displayed in a semi-transparent mode, a second image may be capable of fully expressing (or displaying) the second task.

Additionally, even in case the WFD source outputs a sound of the first task and a sound of the second task at the same time, the first WFD sink may be capable of streaming only the sound of the first task, and second WFD sink may be capable of streaming only the sound of the second task.

In order to stream the first data to the fist WFD sink, and in order to stream the second data to the second WFD sink, the WFD source shall separately establish a WFD session with the first WFD sink and the second WFD sink. However, the properties (e.g., moving picture resolution, audio or video codec, and so on) of the tasks for each WFD session may be independent.

Which one of the multiple tasks is to be streamed to the WFD sink device may be selected by a user input or may be automatically selected in accordance with a predetermined value.

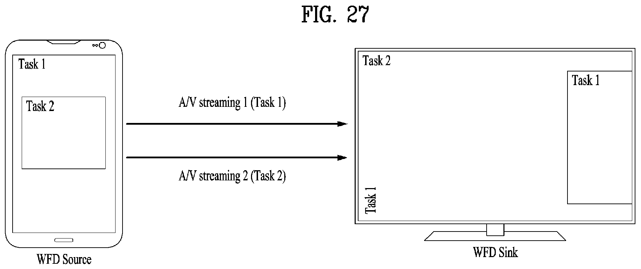

As another example, FIG. 27 illustrates a diagram showing an example of having multiple sets of encoding data for each task streamed to a single WFD sink, when a WFD source is performing multiple tasks. If a WFD session is established with the WFD sink, while the WFD source is executing multiple tasks, after carrying out an encoding process on some of the multiple tasks that are currently being executed, the WFD source may transmit the encoded data to the WFD sink through a separate stream. For example, as shown in the example illustrated in FIG. 27, in case 2 sets of encoding data are created with respect to the first task and the second task as the respective targets, the WFD source may be capable of transmitting each of the 2 sets of encoding data to the WFD sink through a different stream.

After receiving the 2 sets of encoding data, the WFD sink may be capable of adequately positioning and displaying the 2 sets of data in accordance with the user's preference or in accordance with a predetermined value. For example, in the WFD source, even if the second task is in a state of being displayed while the first task is being displayed as a background, since the WFD sink respectively receives a first image targeting the first task and a second image targeting the second task through a separate stream, the WFD source may position the first task and the second task in a different format as compared to the WFD source. An example, wherein the WFD source displays the second task while the first task is being displayed as the background, whereas the WFD sink displays the first task while the second task is being displayed as the background, is shown in FIG. 27.

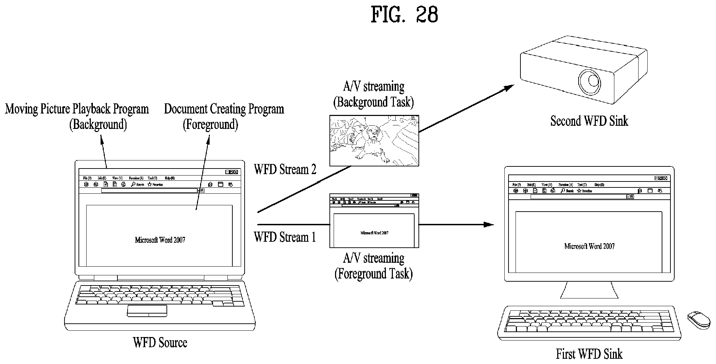

The WFD source may also stream the task, which is being executed in the background state, to the WFD sink. For example, FIG. 28 illustrates a diagram showing an example of having a WFD source stream a foreground task and a background task to different WFD sinks. For simplicity in the description, as shown in the example illustrated in FIG. 28, it will be assumed that the WFD source is currently executing a document creating program (or word processing program) in a foreground state and a moving picture playback program in a background state. In this case, the WFD source may respectively stream first data, which are encoded with respect to the document creating program that is currently being executed in the foreground state, and second data, which are encoded with respect to the moving picture playback program that is currently being executed in the background state, to the first WFD sink and the second WFD sink.

Accordingly, even if the WFD source is not outputting an image (and sound) respective to the current second task, the WFD sink may be capable of outputting the image (and sound) respective to the current second task.

The WFD source may also encode the AV data in window units, and, then, the WFD source may stream, the encoded AV data to the WFD sink.

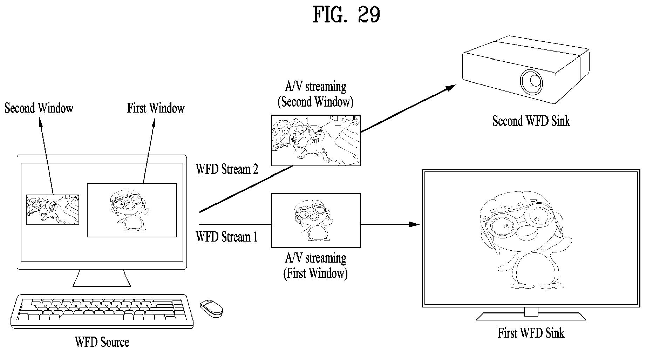

For example, FIG. 29 illustrates a diagram showing an example of having encoding data for each window streamed to different WFD sinks, when a WFD sink is displaying multiple windows. As shown in the example illustrated in FIG. 29, while the WFD source is displaying multiple windows, if a WFD session is established with a first WFD sink and a second WFD sink, the WFD source may stream encoding data respective to the AV data of any one of the multiple tasks that are being executed to the first WFD sink, and the WFD source may stream encoding data respective the AV data of another one of the multiple tasks that are being executed to the second WFD sink.

For example, as shown in the example illustrated in FIG. 29, in case the first WFD source corresponds to a television, and in case the second WFD source corresponds to a projector, the WFD source may stream first data having the AV data of a first window encoded therein to the TV, and the WFD source may stream second data having the AV data of a second window encoded therein to the projector.

In case the task that is currently being executed by the WFD source corresponds to a task related to sound play (or playback), the WFD source may stream encoding data respective to corresponding task to an audio device type WFD sink, and, in case the task that is currently being executed by the WFD source corresponds to a task requiring image display, the WFD source may stream encoding data respective to the corresponding task to a video device type WFD sink.

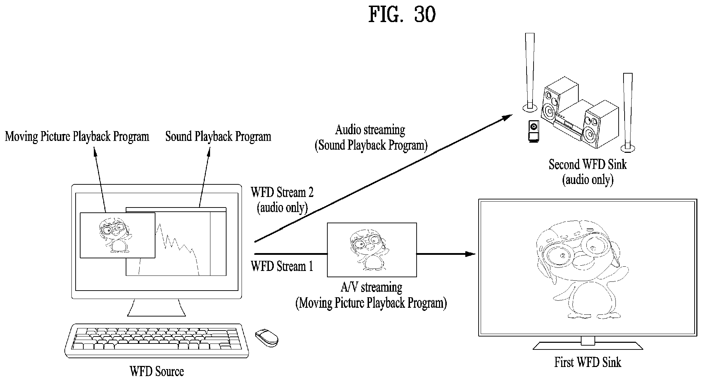

For example, FIG. 30 illustrates a diagram showing an example of data being streamed in accordance with an attribute of a task. For simplicity in the description, it will be assumed that the WFD source is in a state of executing a moving picture playback program and a music playback program, and it will also be assumed that the WFD sink is in a state of having created a WFD session with the TV and an Audio system.

In this case, the WFD source may be capable of streaming the data having AV data of the moving picture playback program encoded therein to the TV and may also be capable of streaming the data having sound data of the sound playback program encoded therein to the TV

If picture images are stored in the WFD source, the WFD source may be controlled to transmit data having an image corresponding to a slide show, which is configured of the stored picture images, encoded therein to the WFD sink. Additionally, the WFD sink may also stream a background music, which has been configured to be played when playing (or playing-back) the slide show, to the WFD sink.

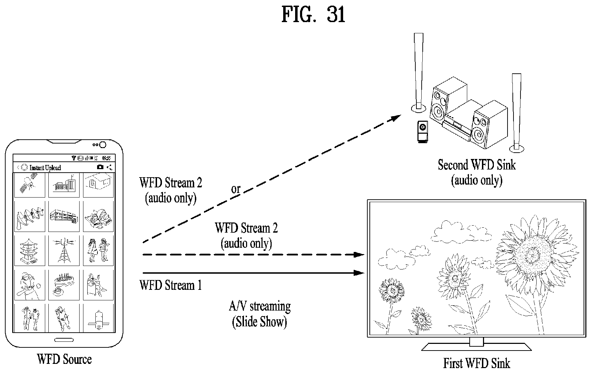

For example, FIG. 31 illustrates a diagram showing an example of data having a slide show of photo images stored in a WFD source encoded therein streamed from a WFD sink. If picture images are stored in the WFD source, even if the stored picture images are not being displayed as a slide show, the WFD source may encode an image, which can be estimated when configuring the stored picture images in the form of a slide show. Moreover, in case a background music, which is configured to be played when playing the slide show, exists, the WFD source may also create data having the background music encoded therein.

The WFD source may stream the encoded data to the WFD sink. At this point, the encoded image and sound may be transmitted to the same WFD sink (e.g., TV), or the encoded image may be transmitted to a first WFD sink (e.g., TV), and the encoded sound may be transmitted to a second WFD sink (e.g., audio system).

If the WFD source is being operated in a multiple display environment, the WFD source may stream encoding data respective to each display to different WFD sinks.

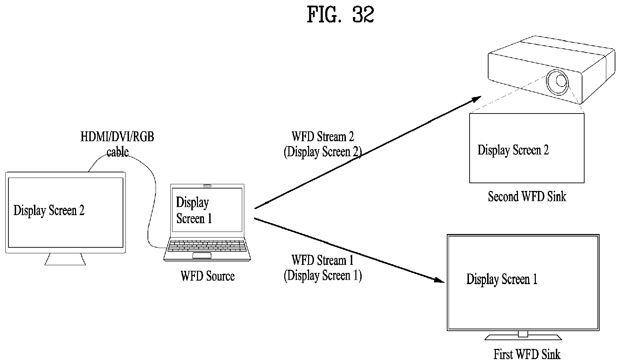

For example, FIG. 32 illustrates a diagram showing an example of having encoding data for each display streamed to different WFD sinks, when a WFD source is being operated in a multiple display environment. As shown in the example illustrated in FIG. 32, it will be assumed that the WFD source corresponds to a laptop, and it will also be assumed that the WFD source has established a multiple display environment by using its own display and monitor.

In this case, the WFD source may transmit first data having the image outputted through its own display unit encoded therein to the first WFD sink, and the WFD source may transmit second data having the image outputted through an additional monitor encoded therein to the second WFD sink.

In case the first WFD source corresponds to a television, and in case the second WFD source corresponds to a projector, the TV that has received the first data may output the same display screen as the display unit of the laptop, and the projector that has received the second data may output the same display screen as the monitor, which is connected to the laptop.

The WFD sink that has received data from the WFD source may decode the received data and may output the decoded data. At this point, instead of outputting the data received from the WFA source on an entire screen (or full screen), the WFD sink may output the received data along with the task, which the WFD sink was initially executing.

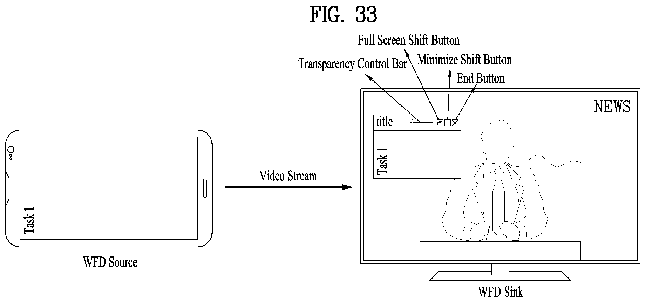

For example, FIG. 33 illustrates a diagram showing an example of having a WFD sink output data that are received along with a task, which is being performed by the WFD sink itself. The WFD sink may output the data (i.e., WFD stream) received from the WFD sink along with the task (e.g., application or broadcast, and so on), which the WFD sink was initially executing. At this point, in order to prevent the received data from covering the task, which the WFD sink was initially executing, the WFD sink may also display the received data in a semi-transparent mode. Moreover, the WFD sink may be controlled to display a transparency control bar for controlling the transparency of the received data.

In addition to this, the WFD sink may also display a button for controlling whether or not to display the received data on the entire screen (or full screen), a button for controlling whether or not to minimize the received data, a button for deciding whether or not to end the received data, and so on. It will also be apparent that the display position and display size of the received data may be varied by a user input.

In case the task, which was initially being executed by the WFD sink itself, corresponds to outputting sound, as shown in the example illustrated in FIG. 33, the WFD sink may only receive video from the WFD source and may output the received video. Conversely, it will be apparent that the WFD sink may stop performing the task of outputting sound, which the WFD sink was initially carrying out, and that the WFD sink may receive both video and audio from the WFD source and output the received video and audio.

One WFD sink may be physically or logically connected to multiple display devices. For example, as presented above in the example shown in FIG. 32, if a computer, which is being operated in a multiple display environment, is being operated as the WFD sink, it may be assumed that the WFD sink is physically connected to multiple display devices, and if a control device for controlling a head unit, which is attached to seats of a car (or vehicle), and a center fascia display is being operated as the WFD sink, it may be assumed that the WFD sink is physically connected to multiple display devices (i.e., head unit and center fascia display).

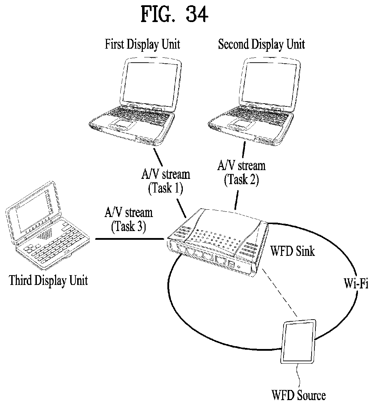

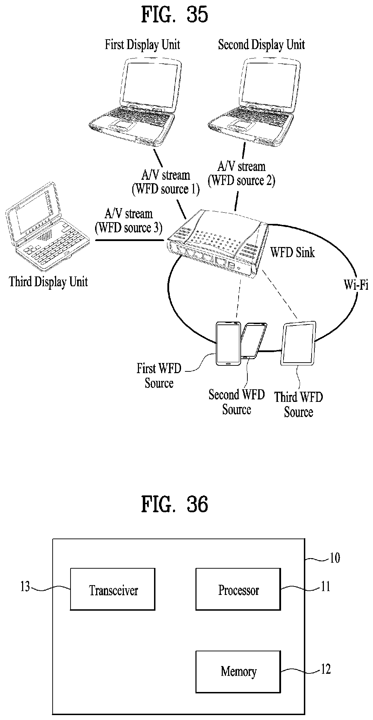

As described above, if the WFD sink is in a state of being connected to multiple display devices, the WFD sink may perform control operations so that different data sets can be respectively streamed to each of the multiple display devices being connected to the WFD sink. For example, FIG. 34 and FIG. 35 illustrate an example of having a WFD source perform control operations so that different sets of data can be streamed for each display of the WFD sink. In FIG. 34, an example of a first task of the WFD source being streamed to a first display unit of the WFD sink is shown, an example of a second task of the WFD source being streamed to a second display unit of the WFD sink is shown, and an example of a third task of the WFD source being streamed to a third display unit of the WFD sink is shown.

For this, the WFD source and the WFD sink shall establish multiple WFD sessions, and at least one of the WFD source and the WFD sink shall designate displays that are to respectively receive streaming for each data set. Moreover, during the WFD device discovery / service discovery procedure or the WFD capability negotiation procedure, the WFD source may acquire a number of display devices that are connected to the WFD sink.

In case the WFD sink has established a WFD session with multiple WFD sources, the WFD sink may be controlled so that AV data of different WFD sources can be respectively outputted for each display. For example, in FIG. 35, an example of having AV data of a first WFD source be streamed to a first display unit of the WFD sink is shown, an example of having AV data of a second WFD source be streamed to a second display unit of the WFD sink is shown, and an example of having AV data of a third WFD source be streamed to a third display unit of the WFD sink is shown.

FIG. 36 illustrates a structure of a wireless device according to an exemplary embodiment of the present invention.

The wireless device (10) may include a processor (11), a memory (12), and a transceiver (13). The transceiver (13) may transmit/receive radio signals (or wireless signals) and may implement a physical layer according to, for example, an IEEE 802 system. The processor (11) is electrically connected to the transceiver (13), thereby being capable of implementing a physical layer and/or a MAC layer according to the IEEE 802 system. Additionally, the processor (11) may be configured to perform the operations of encoding and decoding audio/video for WFD services. Moreover, a module that realizes the operations of the wireless device according to the above-described diverse exemplary embodiments of the present invention may be stored in the memory (12), and the module may also be executed by the processor (11). The memory (12) may either be included inside of the processor (11), or the memory (12) may be installed outside of the processor (11) so as to be connected to the processor (11) through a disclosed means. Although it is not shown in the drawing, it shall be said that the wireless device (10) may also include a display unit and a sound (or audio) output unit for respectively outputting images (video) and sound (audio).

The detailed configuration of the wireless device (10) of FIG. 36 may be realized by having the features described above in the diverse exemplary embodiments of the present invention be independently applied, or by having two or more of the exemplary embodiments applied simultaneously.

The above-described embodiments of the present invention may be implemented by using diverse means. For example, the embodiments of the present invention may be implemented in the form of hardware, firmware, or software, or in a combination of hardware, firmware, and/or software.

In case of implementing the embodiments of the present invention in the form of hardware, the method according to the embodiments of the present invention may be implemented by using at least one of ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, micro controllers, micro processors, and so on.

In case of implementing the embodiments of the present invention in the form of firmware or software, the method according to the embodiments of the present invention may be implemented in the form of a module, procedure, or function performing the above-described functions or operations. A software code may be stored in a memory unit and driven by a processor. Herein, the memory unit may be located inside or outside of the processor, and the memory unit may transmit and receive data to and from the processor by using a wide range of means that have already been disclosed.

As described above, a detailed description of the preferred mode for carrying out the present invention disclosed herein is provided so that anyone skilled in the art can be capable of realizing and performing the present invention. Although the description provided above is described with reference to the preferred mode for carrying out the present invention, it will be apparent to those skilled in the art that the present invention may be diversely corrected and modified without departing from the spirit and scope of the present invention, which are disclosed in the appended claims of the present invention disclosed below. Therefore, the present invention will not be limited only to the exemplary embodiments disclosed herein. Instead, the present invention seeks to provide a broader scope of the present invention best fitting the disclosed principles and new characteristics of the invention described herein.

### [Industrial Applicability]

Although the above-described diverse exemplary embodiment according to the present invention are described based upon the IEEE 802.11 system, the exemplary embodiments may also be applied to other diverse mobile communication systems by using the same method.

## Claims

1. A method performed in a first wireless device supporting a Wi-Fi Direct service for searching a device, the method comprising:
transmitting a probe request frame to a second wireless device;
receiving a probe response frame from the second wireless device in response to the probe request frame,
wherein the probe response frame includes information on an Access Point, AP, to which the second wireless device is currently connected; and
establishing a session with the second wireless device through the AP when the first wireless device and the second wireless device are connected to a same AP,
wherein the session is established based on application service platform, ASP, supported by the Wi-Fi Direct service.

2. The method of claim 1, wherein the AP information includes information on AP identification inter-connected to the second device operated, a frequency band in which an AP that is inter-connected to the second wireless device operated, information on a channel in which an AP that is inter-connected to the second wireless device operated, and information on an IP address of the second wireless device.

3. The method of claim 1, wherein the first wireless device and the second wireless device perform a discovery of service using the connected AP.

4. The method of claim 1, wherein the probe request frame includes information on an AP to which the first wireless device is currently connected.

5. The method of claim 1, wherein the probe response frame includes a WFD, Wi-Fi Display, information element and a P2P, Peer to Peer, information element, and
wherein the AP information is included in the probe response frame as a subelement of at least one of the WFD information element and the P2P information element.

6. The method of claim 1, the method further comprising:
if the first wireless device and the second wireless device have a capability of performing a service discovery, or search, procedure,
transmitting a service discovery request frame to the second wireless device; and
receiving a probe response frame from the second wireless device in response to the service discovery request frame.

7. The method of claim 6, wherein the service discovery request frame includes information on an AP to which the first wireless device is currently connected, and
wherein the service discovery response frame includes information on an AP to which the second wireless device is currently connected.

8. The method of claim 1, the method further comprising:
transmitting a discovery request frame, and
receiving a discovery response frame from a second wireless device in response to the discovery request frame,
wherein the discovery response frame includes information on an Access Point, AP, to which the second wireless device is currently connected.

9. The method of claim 8, wherein the information on the AP to which the second wireless device is currently connected is included in one of the probe response frame and the discovery response frame.

10. A method performed in a second wireless device supporting a Wi-Fi Direct service for responding to a device search, the method comprising:
receiving a probe request frame from a first wireless device;
transmitting a probe response frame in response to the probe request frame,
wherein the probe response frame includes information on an Access Point, AP, to which the second wireless device is currently connected; and
establishing a session with the first wireless device through the AP when the first wireless device and the second wireless device are connected to a same AP,
wherein the session is established based on application service platform, ASP, supported by the Wi-Fi Direct service.

11. A first wireless device supporting a Wi-Fi Direct service that performs a device search, the first wireless device (10) comprises:
a transceiver (13); and
a processor (11) configured to control the transceiver,
wherein the processor is further configured to:
transmit a probe request frame using the transceiver,
receive a probe response frame from the second wireless device in response to the probe request frame using the transceiver,
wherein the probe response frame includes information on an Access Point, AP, to which the second wireless device is currently connected, and
establish a session with the second wireless device through the AP when the first wireless device and the second wireless device are connected to a same AP,
wherein the session is established based on application service platform, ASP, supported by the Wi-Fi Direct service.

12. A second wireless device (10) supporting a Wi-Fi Direct service that responds to a device search, the second wireless device comprises:
a transceiver (13); and
a processor configured to control the transceiver,
wherein the process is further configured to:
receive, from a first wireless device, a probe request frame,
transmit, to the first wireless device, a probe response frame including information on an Access Point, AP, to which the second wireless device is currently connected when the transceiver receives a probe request frame from a first wireless device, and
establish a session with the first wireless device through the AP when the first wireless device and the second wireless device are connected to a same AP,
wherein the session is established based on application service platform, ASP, supported by the Wi-Fi Direct service.

## Patentansprüche

1. Verfahren, durchgeführt in einer ersten drahtlosen Vorrichtung, die einen Wi-Fi-Direct-Dienst unterstützt, zur Suche nach einer Vorrichtung, wobei das Verfahren umfasst:
Senden eines Probe-Request-Frames an eine zweite drahtlose Vorrichtung;
Empfangen eines Probe-Response-Frames aus der zweiten drahtlosen Vorrichtung als Antwort auf den Probe-Request-Frame,
wobei der Probe-Response-Frame Informationen über einen Zugangspunkt (AP), mit dem die zweite drahtlose Vorrichtung aktuell verbunden ist, einschließt; und
Herstellen einer Verbindung mit der zweiten drahtlosen Vorrichtung über den AP, wenn die erste drahtlose Vorrichtung und die zweite drahtlose Vorrichtung mit einem selben AP verbunden sind,
wobei die Verbindung auf der Grundlage der durch den Wi-Fi-Direct-Dienst unterstützten Anwendungsdienstplattform (ASP) hergestellt wird.

2. Verfahren nach Anspruch 1, wobei die AP-Informationen einschließen: Informationen über die AP-Kennung, zusammengeschaltet mit der betriebenen zweiten Vorrichtung, ein Frequenzband, in dem ein mit der zweiten drahtlosen Vorrichtung zusammengeschalteter AP betrieben wird, Informationen über einen Kanal, in dem ein mit der zweiten drahtlosen Vorrichtung zusammengeschalteter AP betrieben wird, und Informationen über eine IP-Adresse der zweiten drahtlosen Vorrichtung.

3. Verfahren nach Anspruch 1, wobei die erste drahtlose Vorrichtung und die zweite drahtlose Vorrichtung einen Dienst unter Verwendung des verbundenen AP auffinden.

4. Verfahren nach Anspruch 1, wobei der Probe-Request-Frame Informationen über einen AP, mit dem die erste drahtlose Vorrichtung aktuell verbunden ist, einschließt.

5. Verfahren nach Anspruch 1, wobei der Probe-Response-Frame ein Wi-Fi Display, WFD, - Informationselement und ein Peer to Peer, P2P, -Informationselement einschließt und
wobei die AP-Informationen in dem Probe-Response-Frame als Unterelement des WFD-Informationselements oder/und des P2P-Informationselements eingeschlossen sind.

6. Verfahren nach Anspruch 1, wobei das Verfahren ferner umfasst:
falls die erste drahtlose Vorrichtung und die zweite drahtlose Vorrichtung eine Fähigkeit zur Durchführung einer Dienstauffindungsprozedur, oder Suchprozedur, aufweisen,
Senden eines Dienstauffindung-Request-Frames an die zweite drahtlose Vorrichtung; und
Empfangen eines Probe-Response-Frames aus der zweiten drahtlosen Vorrichtung als Antwort auf den Dienstauffindung-Request-Frame.

7. Verfahren nach Anspruch 6, wobei der Dienstauffindung-Request-Frame Informationen über einen AP, mit dem die erste drahtlose Vorrichtung aktuell verbunden ist, einschließt und
wobei der Dienstauffindung-Response-Frame Informationen über einen AP, mit dem die zweite drahtlose Vorrichtung aktuell verbunden ist, einschließt.

8. Verfahren nach Anspruch 1, wobei das Verfahren ferner umfasst:
Senden eines Auffindung-Request-Frames und
Empfangen eines Auffindung-Response-Frames aus einer zweiten drahtlosen Vorrichtung als Antwort auf den Auffindung-Request-Frame,
wobei der Auffindung-Response-Frame Informationen über einen Zugangspunkt, AP, mit dem die zweite drahtlose Vorrichtung aktuell verbunden ist, einschließt.

9. Verfahren nach Anspruch 8, wobei die Informationen über den AP, mit dem die zweite drahtlose Vorrichtung aktuell verbunden ist, in dem Probe-Response-Frame oder dem Auffindung-Response-Frame eingeschlossen sind.

10. Verfahren, durchgeführt in einer zweiten drahtlosen Vorrichtung, die einen Wi-Fi-Direct-Dienst unterstützt, zur Antwort auf eine Suche nach einer Vorrichtung, wobei das Verfahren umfasst:
Empfangen eines Probe-Request-Frames aus einer ersten drahtlosen Vorrichtung;
Senden eines Probe-Response-Frames als Antwort auf den Probe-Request-Frame,
wobei der Probe-Response-Frame Informationen über einen Zugangspunkt, AP, mit dem die zweite drahtlose Vorrichtung aktuell verbunden ist, einschließt; und
Herstellen einer Verbindung mit der ersten drahtlosen Vorrichtung über den AP, wenn die erste drahtlose Vorrichtung und die zweite drahtlose Vorrichtung mit einem selben AP verbunden sind,
wobei die Verbindung auf der Grundlage der durch den Wi-Fi-Direct-Dienst unterstützten Anwendungsdienstplattform, ASP, hergestellt wird.

11. Erste drahtlose Vorrichtung, die einen Wi-Fi-Direct-Dienst unterstützt und eine Suche nach einer Vorrichtung durchführt, wobei die erste drahtlose Vorrichtung (10) umfasst:
einen Transceiver (13); und
einen Prozessor (11), der so konfiguriert ist, dass er den Transceiver steuert,
wobei der Prozessor ferner so konfiguriert ist, dass er:
einen Probe-Request-Frame unter Verwendung des Transceivers sendet,
einen Probe-Response-Frame aus der zweiten drahtlosen Vorrichtung als Antwort auf den Probe-Request-Frame unter Verwendung des Transceivers empfängt,
wobei der Probe-Response-Frame Informationen über einen Zugangspunkt, AP, mit dem die zweite drahtlose Vorrichtung aktuell verbunden ist, einschließt, und
eine Verbindung mit der zweiten drahtlosen Vorrichtung über den AP herstellt, wenn die erste drahtlose Vorrichtung und die zweite drahtlose Vorrichtung mit einem selben AP verbunden sind,
wobei die Verbindung auf der Grundlage der durch den Wi-Fi-Direct-Dienst unterstützten Anwendungsdienstplattform, ASP, hergestellt wird.

12. Zweite drahtlose Vorrichtung (10), die einen Wi-Fi-Direct-Dienst unterstützt und auf eine Suche nach einer Vorrichtung antwortet, wobei die zweite drahtlose Vorrichtung umfasst:
einen Transceiver (13); und
einen Prozessor, der so konfiguriert ist, dass er den Transceiver steuert, wobei der Prozessor
ferner so konfiguriert ist, dass er:
aus einer ersten drahtlosen Vorrichtung einen Probe-Request-Frame empfängt,
an die erste drahtlose Vorrichtung einen Probe-Response-Frame sendet, der Informationen einschließt über einen Zugangspunkt, AP, mit dem die zweite drahtlose Vorrichtung aktuell verbunden ist, wenn der Transceiver aus einer ersten drahtlosen Vorrichtung einen Probe-Request-Frame empfängt, und
eine Verbindung mit der ersten drahtlosen Vorrichtung über den AP herstellt, wenn die erste drahtlose Vorrichtung und die zweite drahtlose Vorrichtung mit einem selben AP verbunden sind,
wobei die Verbindung auf der Grundlage der durch den Wi-Fi-Direct-Dienst unterstützten Anwendungsdienstplattform, ASP, hergestellt wird.

## Revendications

1. Procédé mis en oeuvre dans un premier dispositif sans fil supportant un service Wi-Fi direct pour rechercher un dispositif, le procédé comprenant :
la transmission d'une trame de demande de sondage à un deuxième dispositif sans fil ;
la réception d'une trame de réponse de sondage provenant du deuxième dispositif sans fil en réponse à la trame de demande de sondage,
dans lequel la trame de réponse de sondage comporte des informations sur un point d'accès, AP, auquel le deuxième dispositif sans fil est actuellement connecté ; et
l'établissement d'une session avec le deuxième dispositif sans fil par l'intermédiaire du point d'accès, AP, lorsque le premier dispositif sans fil et le deuxième dispositif sans fil sont connectés à un même point d'accès, AP,
dans lequel la session est établie sur la base d'une plateforme de services d'application, ASP, supportée par le service Wi-Fi direct.

2. Procédé selon la revendication 1, dans lequel les informations de point d'accès, AP, comportent des informations sur une identification de point d'accès, AP, interconnecté au deuxième dispositif actionné, une bande de fréquences dans laquelle un AP interconnecté au deuxième dispositif sans fil est actionné, des informations sur un canal dans lequel un AP interconnecté au deuxième dispositif sans fil est actionné, et des informations sur une adresse IP du deuxième dispositif sans fil.

3. Procédé selon la revendication 1, dans lequel le premier dispositif sans fil et le deuxième dispositif sans fil effectuent une découverte de services par l'intermédiaire de l'AP connecté.

4. Procédé selon la revendication 1, dans lequel la trame de demande de sondage comporte des informations sur un AP auquel le premier dispositif sans fil est actuellement connecté.

5. Procédé selon la revendication 1, dans lequel la trame de réponse de sondage comporte un élément d'information d'affichage Wi-Fi, WFD, et un élément d'information de pair à pair, P2P, et
dans lequel les informations de point d'accès, AP, sont incluses dans la trame de réponse de sondage en tant que sous-élément d'au moins un élément parmi l'élément d'information WFD et l'élément d'information P2P.

6. Procédé selon la revendication 1, le procédé comprenant en outre :
si le premier dispositif sans fil et le deuxième dispositif sans fil possèdent la capacité d'effectuer une procédure de découverte, ou recherche, de services,
la transmission d'une trame de réponse de découverte de services au deuxième dispositif sans fil ; et
la réception d'une trame de réponse de sondage provenant du deuxième dispositif sans fil en réponse à la trame de demande de découverte de services.

7. Procédé selon la revendication 6, dans lequel la trame de demande de découverte du service comporte des informations sur un AP auquel le premier dispositif sans fil est actuellement connecté, et
dans lequel la trame de réponse de découverte de services comporte des informations sur un AP auquel le deuxième dispositif sans fil est actuellement connecté.

8. Procédé selon la revendication 1, le procédé comprenant en outre :
la transmission d'une trame de demande de découverte, et
la réception d'une trame de réponse de découverte provenant d'un deuxième dispositif sans fil en réponse à la trame de demande de découverte,
dans lequel la trame de réponse de découverte comporte des informations sur un point d'accès, AP, auquel le deuxième dispositif sans fil est actuellement connecté.

9. Procédé selon la revendication 8, dans lequel des informations sur l'AP auquel le deuxième dispositif sans fil est actuellement connecté sont incluses dans une trame parmi la trame de réponse de sondage et la trame de réponse de découverte.

10. Procédé effectué dans un deuxième dispositif sans fil supportant un service Wi-Fi direct pour répondre à une recherche de dispositif, le procédé comprenant :
la réception d'une trame de demande de sondage provenant d'un premier dispositif sans fil ;
la transmission d'une trame de réponse de sondage en réponse à la trame de demande de sondage,
dans lequel la trame de réponse de sondage comporte des informations sur un point d'accès, AP, auquel deuxième dispositif sans fil est actuellement connecté ; et
l'établissement d'une session avec le premier dispositif sans fil par l'intermédiaire de l'AP lorsque le premier dispositif sans fil et le deuxième dispositif sans fil sont connectés au même AP,
dans lequel la session est établie sur la base d'une plateforme de services d'application soutenue par le service Wi-Fi direct.

11. Premier dispositif sans fil supportant un service Wi-Fi direct effectuant une recherche de dispositifs, le premier dispositif sans fil (10) comprenant :
un émetteur-récepteur (13) ; et
un processeur (11) configuré pour contrôler l'émetteur-récepteur,
dans lequel le processeur est en outre configuré pour :
transmettre une trame de demande de sondage par l'intermédiaire de l'émetteur-récepteur,
recevoir une trame de réponse de sondage provenant du deuxième dispositif sans fil en réponse à la trame de demande de sondage par l'intermédiaire de l'émetteur-récepteur,
dans lequel la trame de réponse de sondage comporte des informations sur un point d'accès, AP, auquel le deuxième dispositif sans fil actuellement connecté, et
établir une session avec le deuxième dispositif sans fil par l'intermédiaire de l'AP, lorsque le premier dispositif sans fil et le deuxième dispositif sans fil sont connectés à un même AP,
dans laquelle la session est établie sur la base d'une plateforme de services d'application soutenue par le service Wi-Fi direct.

12. Deuxième dispositif sans fil (10) soutenant un service Wi-Fi direct répondant à une recherche dispositif, le deuxième dispositif sans fil comprenant :
un émetteur-récepteur (13) ; et
un processeur (11) configuré pour contrôler l'émetteur-récepteur,
dans lequel le processeur est en outre configuré pour :
recevoir, en provenance d'un premier dispositif sans fil, une trame de demande de sondage,
transmettre, au premier dispositif, une trame de réponse de sondage comportant des informations sur un point d'accès, AP, auquel le deuxième dispositif sans fil est actuellement connecté lorsque l'émetteur-récepteur reçoit une trame de demande de sondage provenant d'un premier dispositif sans fil, et
établir une session avec le premier dispositif sans fil par l'intermédiaire de l'AP lorsque le premier dispositif sans fil et le deuxième dispositif sans fil sont connectés à un même AP,
dans laquelle la session est établie sur la base d'une plateforme de services d'application soutenue par le service Wi-Fi direct.
